# EUROPÄISCHE PATENTSCHRIFT

(11) **EP 0 852 559 B1**
(45) Veröffentlichungstag und Bekanntmachung des Hinweises auf die Patenterteilung: **21.03.2001**
(21) Anmeldenummer: 96932568.7
(22) Anmeldetag: 19.09.1996
(51) Int. Cl.: B65G 47/08, B65G 57/24, B65G 57/10, B65G 47/82

(54) **VORRICHTUNG UND VERFAHREN ZUM FORMATIEREN VON GLASBEHÄLTERN ZU EINER PALETTENLAGE**
DEVICE AND PROCESS FOR ARRANGING GLASS CONTAINERS TO FIT ON PALLETS
DISPOSITIF ET PROCEDE POUR AGENCER DES CONTENANTS EN VERRE SUR UNE PALETTE

(30) Priorität: 27.09.1995 DE 19535907
(43) Veröffentlichungstag der Anmeldung: 15.07.1998
(73) Patentinhaber: FIRMA HERMANN HEYE, D-31682 Obernkirchen (DE)
(72) Erfinder: BRONISCH, Helmut, D-31688 Nienstädt (DE); FÜHR, Hans-Bernhard, D-31655 Stadthagen (DE); BIEHLER, Hubert, D-34131 Kassel (DE)
(74) Vertreter: Kosel, Peter, Dipl.-Ing.
(86) Internationale Anmeldenummer: EP9604097
(87) Internationale Veröffentlichungsnummer: WO9711898

(56) Entgegenhaltungen:
- FR-A- 2 607 481
- FR-A- 2 697 512

## Beschreibung

Die Erfindung betrifft eine Vorrichtung gemäß dem Oberbegriff des Anspruchs 1 und ein Verfahren nach dem Oberbegriff des Anspruchs 10.

Bei einer bekannten Vorrichtung dieser Art (FR 2 607 481 A1) werden auf dem Auflauftransportband vier Reihen von Glasbehältern in die Schiebevorrichtung gefördert. Die Schiebevorrichtung schiebt die vier aufgenommenen vorderen Reihenenden jeweils sofort auf das Lagentransportband. So sind zur Bildung einer Lage auf dem Lagentransportband je nach der Anzahl der Reihen je Lage mehrere Schiebevorgänge erforderlich. Auf diese bekannte Weise ist eine Leistung von max. 4 Lagen/min erreichbar. Dazu müssen aber sowohl das Auflauftransportband und die zugehörigen Mechanismen als auch die Schiebevorrichtung mit sehr hoher Geschwindigkeit bewegt werden. Diese Betriebsweise führt zu erhöhtem Verschleiß der Vorrichtung und zu Betriebsstörungen, z. B. durch umfallende Glasbehälter.

Aus der FR 2 697 512 A1 ist es an sich bekannt, Artikel in mehreren, zueinander parallelen Reihen einer Gruppierstation zuzuführen. In der Gruppierstation sind die vorderen Reihenenden, durch Seitenwände voneinander getrennt, in Aufnahmeschächten angeordnet und durch einen Tisch getragen. Wenn die Artikelgruppe in den Aufnahmeschächten vervollständigt ist, wird der Tisch weggezogen. Dadurch fallen die Artikel der Artikelgruppe reihenweise in eine zuvor darunter positionierte, komplementär zu der Artikelgruppe geformte Schale. Die so gefüllte Schale wird abgefördert.

Aus der DE-Offenlegungsschrift 2 120 726 ist es an sich bekannt, Dosen über eine U-förmige Bahn in einer einzigen Reihe einer Längsseite einer Lagenbildungsplatte zuzuführen. Ein vorderes Ende der Dosenreihe wird jeweils längsversetzt gegenüber dem vorherigen vorderen Reihenende durch eine Schubstange quer von der Bahn auf die Lagenbildungsplatte abgeschoben. Sobald die Lagenbildungsplatte mit einer vollständigen Lage Dosen gefüllt ist, wird sie in Längsrichtung über eine Palette in einem Palettierturm bewegt. Dort wird eine Abstreifleiste hinter der Lage positioniert und die Lagenbildungsplatte in ihre Ladestellung zurückbewegt. Dabei wird die Lage von der Lagenbildungsplatte abgestreift. ihre Ladestellung zurückbewegt. Dabei wird die Lage von der Lagenbildungsplatte abgestreift.

Aus der US 3 844 422 A ist es an sich bekannt, Kartons mit untereinander gleicher, rechteckiger Querschnittsfläche über vier Gassen eines Rollenförderers einer Lagenbildezone zuzuführen. Am Ende jeder Gasse ist eine steuerbare Stoppvorrichtung für die Kartons angeordnet. Jede Lage wird mit Kartons aus nur drei Gassen gebildet, während die Kartons in der vierten Gasse gestoppt sind. Bei dieser vierten Gasse handelt es sich abwechselnd um eine der beiden äußeren Gassen, in denen die Kartons mit ihrer langen Seite in Längsrichtung liegen. Die Kartons in den beiden mittleren Gassen sind mit ihren langen Seiten quer angeordnet. Ziel ist es, auf einer Palette nacheinander Kartonlagen mit abwechselndem Packbild zu stapeln, um die Festigkeit des Verbandes der Kartons auf der Palette zu erhöhen. Jede in der Lagenbildezone aus drei Kartonspalten gebildete Kartonlage wird durch eine Schiebevorrichtung in einen Palettierturm über eine Palette geschoben. Die Schiebeeinrichtung weist einen zwischen diesen Stationen verfahrbaren Wagen auf, an dem ein U-förmiger Rahmen mit einer Schiebetraverse heb- und senkbar gelagert ist. Jede zweite Kartonlage wird während ihres Längsverschiebens in den Palettierturm durch eine an dem Wagen angeordnete Querschiebevorrichtung bis zur Anlage an einer Positionierschiene überlagert quer verschoben.

Die US 2 951 574 A zeigt als an sich bekannt Mittel, um den gegenseitigem Abstand von Führungsplatten für parallele Reihen zu fördernder Gegenstände zu verändern. Die Mittel umfassen mit den Führungsplatten gekoppelte Scherengitter.

Der Erfindung liegt die Aufgabe zugrunde, die Betriebgeschwindigkeit der Vorrichtungskomponenten bei wenigstens gleicher Lagenformatierungsleistung herabzusetzen.

Diese Aufgabe ist hinsichtlich der Vorrichtung durch die Merkmale des Anspruchs 1 gelöst. Das Auflauftransportband kann mit konstanter oder gesteuerter Geschwindigkeit laufen. Bei gesteuerter Geschwindigkeit können die Glasbehälter z.B. mit hoher Geschwindigkeit bis kurz vor das Ende der Aufnahmeschächte gefördert werden. Dann wird die Fördergeschwindigkeit reduziert, damit die Glasbehälter durch Füllstücke am Ende der Aufnahmeschächte schonend gestoppt werden können. Die lichte Weite jeder Gasse ist auf eine Querdimension, z.B. den Außendurchmesser, der Glasbehälter einstellbar. Jede Stoppvorrichtung am Abgabeende jeder Gasse kann z.B. eine um eine senkrechte Achse in und aus der Gasse schwenkbare Klappe aufweisen. Das Lagentransportband läuft vorzugsweise mit konstanter Geschwindigkeit um. Durch die kennzeichnenden Merkmale des Anspruchs 1 sind bei mindestens gleicher Formatierungsleistung die Umlaufgeschwindigkeit des Auflauftransportbandes und die Bewegungsgeschwindigkeit der Schiebevorrichtung deutlich reduziert. Entsprechend gering ist der Verschleiß der Vorrichtung. Durch eine Überlagerung der Rückführbewegungen der Schiebevorrichtung kann die Rückführdauer bei sonst gleichen Einzelgeschwindigkeiten abgekürzt werden. Bei kontinuierlich laufendem Lagetransportband kann zur Vermeidung von Kollisionen der Schiebevorrichtung mit den Glasbehältern der gerade abgegebenen Lage die Schiebevorrichtung schräg mit einer Komponente in der zweiten Transportrichtung angehoben werden.

Mit den sieben Gassen gemäß Anspruch 2 lassen sich z.B. gängige Lagen mit 14 oder 21 Reihen von Glasbehältern durch nur eine oder zwei schrittweise Bewegungen der Schiebevorrichtung in der Querebene zusammenstellen. Bei nicht durch Sieben teilbarer Gesamtanzahl der Lagenreihen lassen sich die beim Laden der Schiebevorrichtung gegebenenfalls nicht benötigten Gassen ohne weiteres durch die zugehörigen Stoppvorrichtungen blockieren.

Das Verschlußorgan gemäß Anspruch 3 kann z.B. als Schieber ausgebildet sein, der motorisch gesteuert in seine aktive Position vor den Einlässen der Aufnahmeschächte gefahren wird, sobald die Aufnahmeschächte mit Glasbehältern gefüllt sind. Das Verschlußorgan verhindert, daß während des Überschiebens der Lage auf das Lagentransportband sich Glasbehälter wieder unkontrolliert aus den Aufnahmeschächten herausbewegen. Das Verschlußorgan wird nach Abgabe der Lage an das Lagentransportband und vor neuer Beschickung der Schiebevorrichtung mit Glasbehältern aus den Gassen wieder in seine inaktive Ausgangslage zurückgefahren.

Die Schiebevorrichtungen können jeweils auf die Abmessungen der zu handhabenden Glasbehälter voreingestellt und insgesamt ausgewechselt werden, wenn auf eine andere Sorte Glasbehälter übergegangen wird. Statt dessen kann aber auch gemäß Anspruch 4 vorgegangen werden. Dies erübrigt eine Lagerhaltung unterschiedlicher Schiebevorrichtungen.

Durch die Merkmale des Anspruchs 5 läßt sich die Anpassung der Schiebevorrichtung an unterschiedliche Abmessungen der Glasbehälter besonders einfach durchführen.

Die Merkmale des Anspruchs 6 gewährleisten eine sichere Formatierung der zuvor durch die Schiebevorrichtung an das Lagentransportband abgegebenen Lage. Bei dieser Formatierung laufen nacheinander die einzelnen Reihen der Lage in Berührung jeweils mit der vorangegangenen Reihe. Zur Vermeidung von Kollisionen mit den vordersten Glasbehältern der formatierten Lage wird vorzugsweise die erste Anschlagschiene schräg, mit einer Komponente in der zweiten Transportrichtung, angehoben.

Durch die Merkmale des Anspruchs 7 kann eine Pufferung fertig formatierter Lagen auf dem Lagentransportband erfolgen. Vorzugsweise wird auch hier die zweite Anschlagschiene schräg, mit einer Komponente in der zweiten Transportrichtung, angehoben.

Durch die Merkmale des Anspruchs 8 erzielt man eine betriebssichere Bewegung der Schiebevorrichtung. Vorzugsweise ist die Schiebevorrichtung an einem seitlichen Ausleger des Wagens angebracht. Das Heben und Senken der Schiebevorrichtung wird vorzugsweise durch einen Elektro-Servomotor über einen Zahnriemenantrieb analog dem Wagenantrieb gemäß Anspruch 9 bewerkstelligt.

Die Merkmale des Anspruchs 9 führen zu einer besonders geringen zu bewegenden Masse des Wagens. Das flexible Antriebsorgan kann zur Erzielung reproduzierbarer Bewegungen als Zahnriemen ausgebildet und durch einen Elektro-Servomotor angetrieben sein.

Die zuvor erwähnte Aufgabe ist hinsichtlich des Verfahrens durch die Merkmale des Anspruchs 10 gelöst. So können das Auflauftransportband und die Schiebevorrichtung bei wenigstens gleich hoher Formatierungsleistung mit geringerer Geschwindigkeit bewegt werden. Entsprechend geringer ist auch der Verschleiß der Vorrichtung.

Die Merkmale des Anspruchs 11 gestatten die vollständige Füllung der Schiebevorrichtung mit Glasbehältern unter allen Betriebsbedingungen.

Gemäß Anspruch 12 ist eine zügige Füllung der Schiebevorrichtung mit Glasbehältern auch bei umgefallenen Glasbehältern ermöglicht, ohne daß umgefallene Glasbehälter in die Schiebevorrichtung gelangen können.

Die sieben Gassen gemäß Anspruch 13 gestatten ein schnelles Füllen der Schiebevorrichtung mit Glasbehältern unter allen Betriebsbedingungen.

Die Merkmale des Anspruchs 14 führen zu einer schnellen und schonenden Formatierung der Lagen auf dem Lagentransportband.

Gemäß Anspruch 15 erhält man eine Pufferung fertig formatierter Lagen auf dem Lagentransportband.

Gemäß Anspruch 16 läßt sich die Schiebevorrichtung schnell und ohne großen Umrüstungsaufwand auf die Dimensionen einer neuen Sorte der Glasbehälter einstellen.

Diese und weitere Merkmale und Vorteile der Erfindung werden nachfolgend anhand der in den Zeichnungen dargestellten Ausführungsbeispiele näher erläutert. Es zeigt:
Fig. 1 die Draufsicht auf eine Palettieranlage mit einer Vorrichtung zum Formatieren von Glasbehälterlagen,
Fig. 2 eine Seitenansicht der Palettieranlage gemäß Fig. 1,
Fig. 3 eine Seitenansicht der Transportvorrichtung für die Schiebevorrichtung,
Fig. 4 die Draufsicht auf die Tansportvorrichtung gemäß Fig. 3,
Fig. 5 die Seitenansicht gemäß Linie V-V in Fig. 4,
Fig. 6 eine Seitenansicht auf eine andere Ausführungsform der Schiebevorrichtung,
Fig. 7 die Schnittansicht nach Linie VII-VII in Fig. 6,
Fig. 8 das Detail VIII gemäß Fig. 6 in vergrößerter Darstellung,
Fig. 9 die Schnittansicht nach Linie IX-IX in Fig. 6 in vergrößerter Darstellung,
Fig. 10 die Ansicht gemäß Linie X-X in Fig. 7 in vergrößerter Darstellung,
Fig. 11 Einzelheiten der Schiebevorrichtung in Seitenansicht und
Fig. 12 die Draufsicht gemäß Linie XII-XII in Fig. 11.

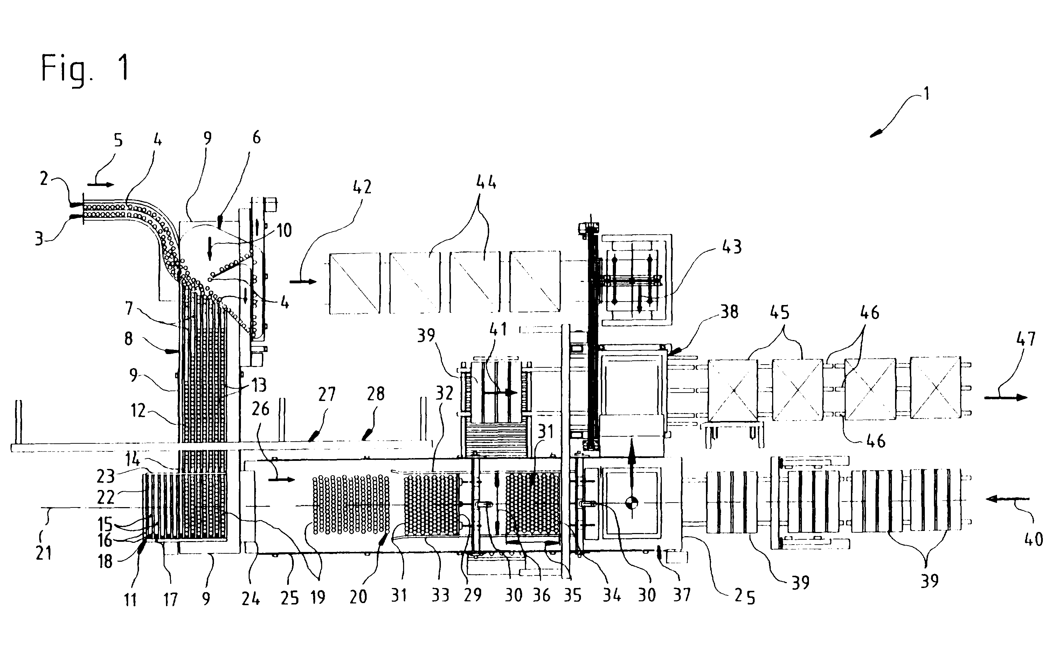

Fig. 1 zeigt die Draufsicht auf eine Palettieranlage 1.

Zwei Reihen 2 und 3 von stehenden Glasbehältern 4 werden in Richtung eines Pfeils 5 einer an sich bekannten Zuteilvorrichtung 6 zugeführt. Die Zuteilvorrichtung 6 verteilt die Glasbehälter 4 in sieben Gassen 7 einer Auflaufvorrichtung 8. Die Auflaufvorrichtung 8 weist ein die Glasbehälter 4 tragendes Auflauftransportband 9 auf, dessen Obertrum sich in einer ersten Transportrichtung 10 bewegt. Der Obertrum des Auflauftransportbandes 9 befindet sich unterhalb der Zuteilvorrichtung 6, unterhalb der Gassen 7 und erstreckt sich auch unterhalb einer Schiebevorrichtung 11.

In jeder Gasse 7 wird eine Reihe 12 der Glasbehälter 4 gebildet. Dazu wird jede Gasse 7 von zwei seitlichen Trennwänden 13 begrenzt. Der Abstand zwischen benachbarten Trennwänden 13 ist je nach der maßgebenden Querdimension, meist dem Durchmesser, der Glasbehälter 4 einstellbar.

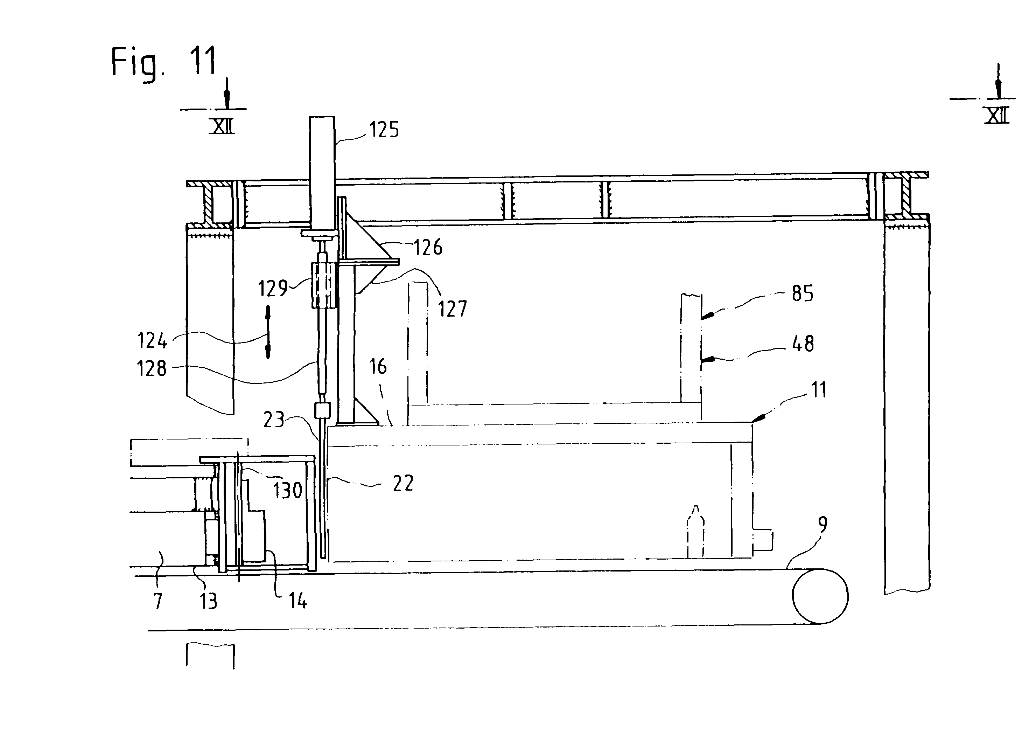

An einem vorderen Abgabeende jeder Gasse 7 ist eine an sich bekannte Stoppvorrichtung 14 angeordnet. Die Stoppvorrichtungen 14 gestatten es, durch eine in die jeweilige Gasse 7 einschwenkbare Klappe (Fig. 11) die zugehörige Reihe 12 der Glasbehälter 4 anzuhalten. Dieses Anhalten ist dann erforderlich, wenn in einer Reihe 12 ein oder mehrere Glasbehälter umgefallen und als solche detektiert worden sind, wenn den Gassen 7 gegenüberliegende Aufnahmeschächte 15 der Schiebevorrichtung 11 mit Glasbehältern 4 gefüllt sind, oder wenn sich die Schiebevorrichtung 11 nicht in ihrer in Fig. 1 gezeigten Ausgangsposition befindet.

Jeder Aufnahmeschacht 15 der Schiebevorrichtung 11 wird durch zwei wandartige, seitliche Begrenzungselemente 16 definiert, die im Fall der Fig. 1 an einer Traverse 17 der Schiebevorrichtung 11 befestigt sind. In das an die Traverse 17 angrenzende vordere Ende jedes Aufnahmeschachts 15 sind im Wechsel ein kürzeres und ein längeres Füllstück 18 eingesetzt. Jedes Füllstück 18 dient als Anschlag für den vordersten Glasbehälter 4 des vorderen Endes 19 jeder Reihe 12, wenn diese vorderen Enden 19 durch das Auflauftransportband 9 in die den Gassen 7 gegenüberliegenden Aufnahmeschächte 15 gefördert werden. Durch die unterschiedliche Länge der Füllstücke 18 ergibt sich dann schon in der Schiebevorrichtung 11 das sogenannte Packbild für die Glasbehälter 4. Dies bedeutet, daß aufeinanderfolgende vordere Enden 19 der Reihen 12 jeweils um eine halbe Teilung gegeneinander versetzt sind.

In Fig. 1 ist derjenige Betriebszustand gezeichnet, in dem die ersten sieben Aufnahmeschächte 15 der Schiebevorrichtung 11 bereits vollständig mit vorderen Reihenenden 19 gefüllt sind. Zu einer vollständigen Lage 20 der Glasbehälter 4 gehören aber in dem dargestellten Beispiel nicht sieben, sondern 13 vordere Reihenenden 19. Deshalb werden in dem in Fig. 1 dargestellten Betriebszustand alle sieben Stoppvorrichtungen 14 aktiviert und dadurch die Reihen 12 geschlossen. Sodann wird die Schiebevorrichtung 11 in Fig. 1 in einer Querebene 21 nach rechts bewegt, bis die noch leeren sechs Aufnahmeschächte 15 der Schiebevorrichtung 11 jeweils einer mit Glasbehältern 4 ausreichend gefüllten Gasse 7 gegenüberstehen. Sodann werden die zu diesen Gassen gehörenden Stoppvorrichtungen 14 inaktiviert, so daß das Auflauftransportband 9 auch in die bisher noch leeren Aufnahmeschächte 15 vordere Reihenenden 19 einfüllen kann.

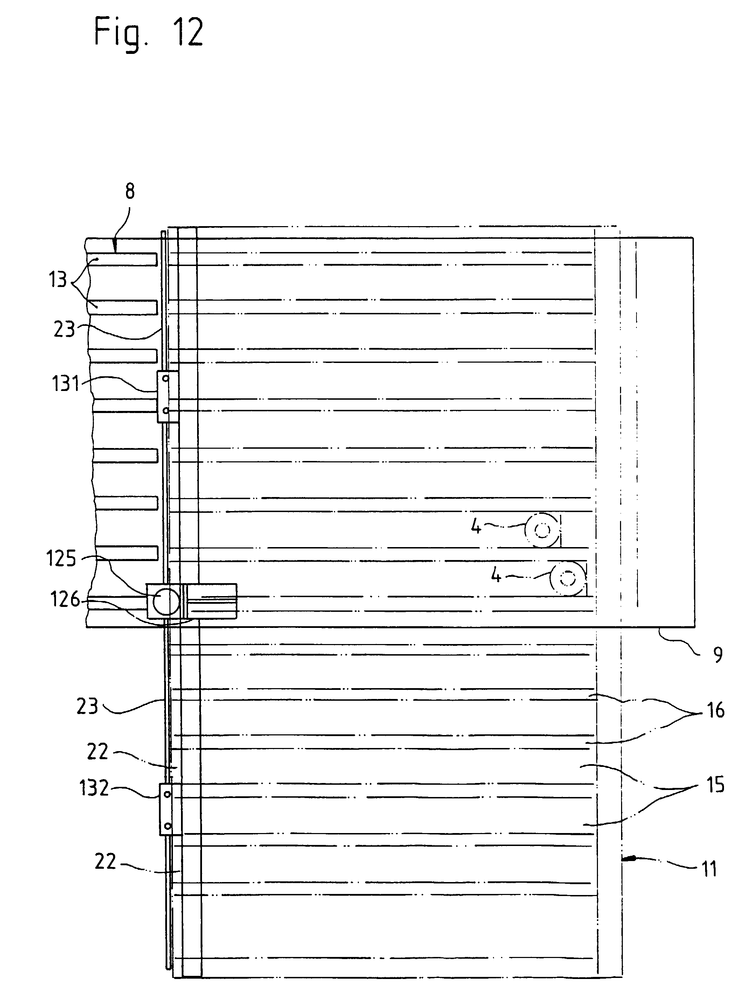

Dann werden die zuvor inaktivierten sechs Stoppvorrichtungen 14 wieder aktiviert. Sodann werden Einlässe 22 der Aufnahmeschächte 15 durch ein als Schieber ausgebildetes Verschlußorgan 23 verschlossen (Fig. 11 und 12).

Die jetzt in der Schiebevorrichtung versammelten 13 vorderen Reihenenden 19 werden sodann in der Querebene 21 von dem Auflauftransportband 9 über ein stationäres Gleitblech 24 auf ein Lagentransportband 25 übergeschoben. Ein Obertrum des Lagentransportbandes 25 bewegt sich vorzugsweise kontinuierlich in einer zweiten Transportrichtung 26. Die Lage 20 wird durch die Schiebevorrichtung 11 dadurch an das Lagentransportband 25 übergeben, daß die Schiebevorrichtung 11 angehoben wird. Dies kann bei kurzzeitig angehaltenem Lagentransportband 25 vor sich gehen, um das Packschema der Lage 20 nicht zu zerstören. Die Schiebevorrichtung 11 kann aber auch bei weiterlaufendem Lagentransportband 25 sowohl von der Lage 20 abgehoben, als auch gleichzeitig mit einer Komponente in der zweiten Transportrichtung 26 bewegt werden. Auch dann löst sich die Schiebevorrichtung 11 störungsfrei von der Lage 20.

Die Schiebevorrichtung 11 wird anschließend in ihre in Fig. 1 gezeichnete Ausgangsposition zurückgeführt. Alle zuvor erwähnten Bewegungen erhält die Schiebevorrichtung 11 von einer in Fig. 1 nur teilweise und schematisch angedeuteten Transportvorrichtung 27. Bestandteil der Transportvorrichtung 27 ist eine geradlinige, stationäre Wagenbahn 28, die sich über den gesamten Bewegungsbereich der Schiebevorrichtung 11 und parallel zu der Querebene 21 erstreckt.

Stromabwärts von der Lage 20, die in ihrer Schiebeendstellung gezeichnet ist, erstreckt sich über dem Lagentransportband 25 über die Breite der Lage 20 eine erste Anschlagschiene 29 für die Glasbehälter 4. Die erste Anschlagschiene 29 ist durch eine Kolben-Zylinder-Einheit 30 schräg nach oben mit einer Komponente in der zweiten Transportrichtung 26 außer Berührung mit der formatierten Lage 31 bewegbar, und auch wieder zurück. Auf beiden Seiten und in Berührung mit der formatierten Lage 31 sind oberhalb des Lagentransportbandes 25 Führungsschienen 32 und 33 vorgesehen. Die Führungsschienen 32, 33 sind auf die Breite der formatierten Lage 31 einstellbar.

Stromabwärts von der ersten Anschlagschiene 29 ist über dem Lagentransportband 25 eine sich über die Breite der formatierten Lage 31 erstreckende zweite Anschlagschiene 34 für die Glasbehälter 4 vorgesehen. Die zweite Anschlagschiene 34 wird in der gleichen Weise wie die erste Anschlagschiene 29 betätigt und befindet sich in einem Abstand von der ersten Anschlagschiene 29, der größer ist als die Länge 35 der formatierten Lage 31. Die Breite 36 der formatierten Lage 31 ist in Fig. eingezeichnet und entspricht der lichten Weite oder dem Abstand zwischen den Führungsschienen 32, 33.

Wenn die zweite Anschlagschiene 34 hochgezogen wird, wird die bis dahin davor gestaute formatierte Lage 31 durch das Lagentransportband 25 bis in eine Transportstation 37 gefördert. Aus der Transportstation 37 erfolgt der Transport der formatierten Lage 31 in beliebiger Weise in einen Palettierturm 38. Dem Palettierturm 38 werden Leerpaletten 39 in den Richtungen von Pfeilen 40 und 41 auf einer im wesentlichen U-förmigen Bahn zugeführt. In den Richtungen von Pfeilen 42 und 43 erhält der Palettierturm 38 ferner sogenannte Einleger 44, also Platten, Böden oder Deckel, die zwischen aufeinanderfolgende formatierte Lagen 31 sowie unter die unterste formatierte Lage 31 und auf die oberste formatierte Lage 31 gebracht werden.

Beladene Paletten 45 verlassen den Palettierturm 38 auf drei zueinander parallelen Kettenförderern 46 in Richtung eines Pfeils 47.

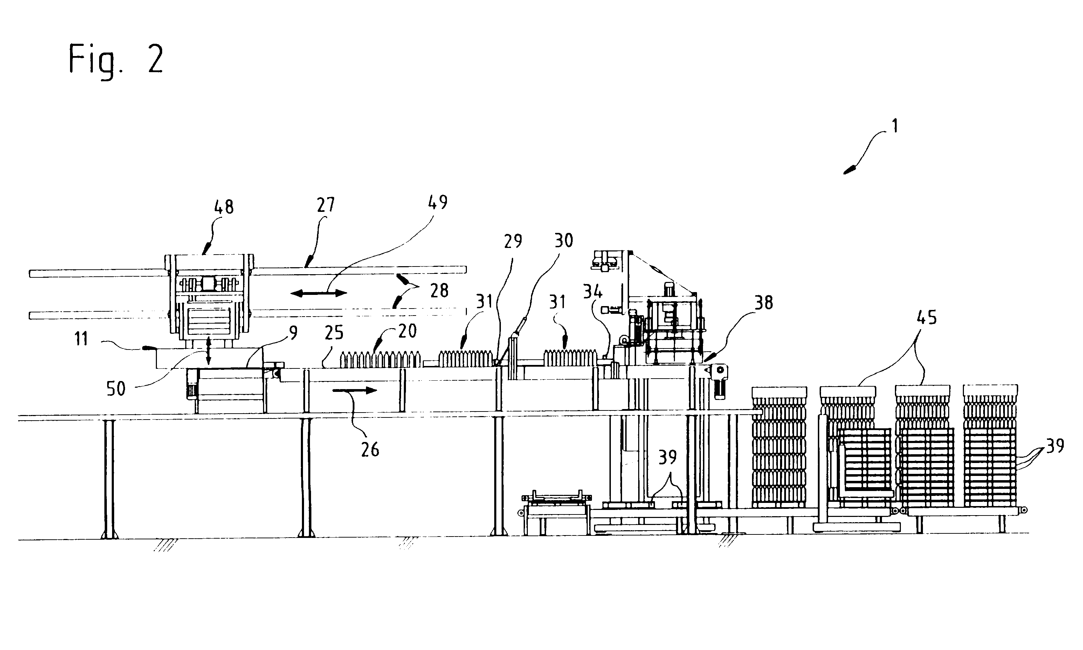

Gemäß Fig. 2 weist die Transportvorrichtung 27 einen Wagen 48 auf, der in den Richtungen eines Doppelpfeils 49 hin und her an der Wagenbahn 28 verfahrbar ist. Die Schiebevorrichtung 11 ist an dem Wagen 48 in den Richtungen des Doppelpfeils 50 heb- und senkbar gehalten.

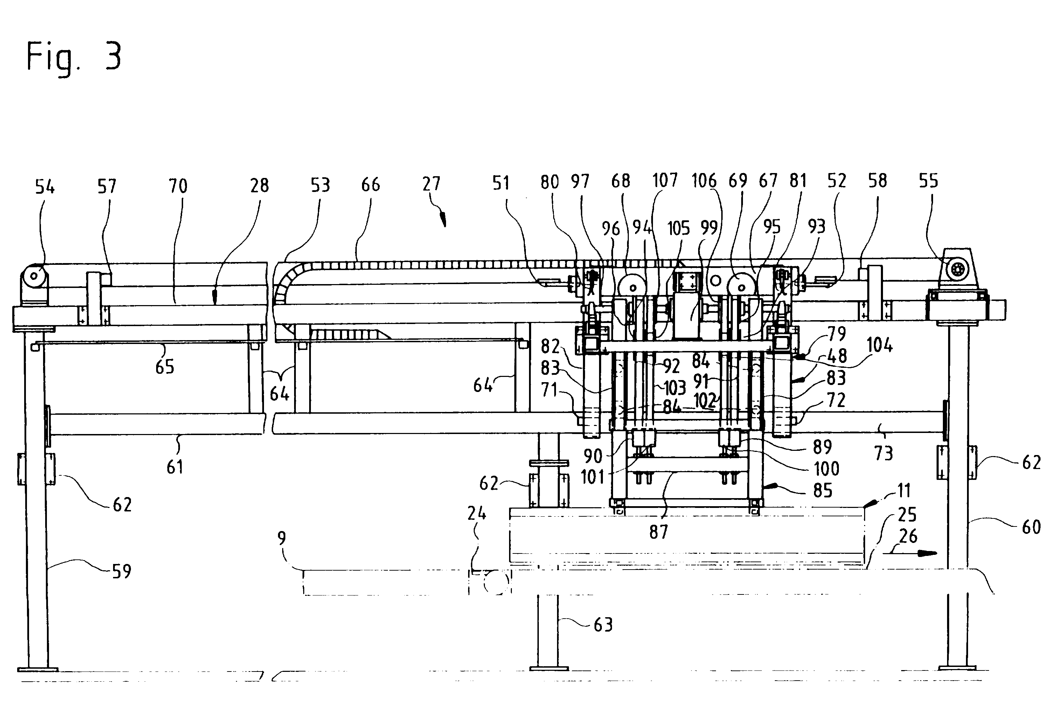

Fig. 3 zeigt Einzelheiten der Transportvorrichtung 27. Die Wagenbahn 28 weist einen waagerechten Träger auf, an dem der Wagen 48 in und entgegengesetzt zu der zweiten Transportrichtung 26 verfahrbar ist.

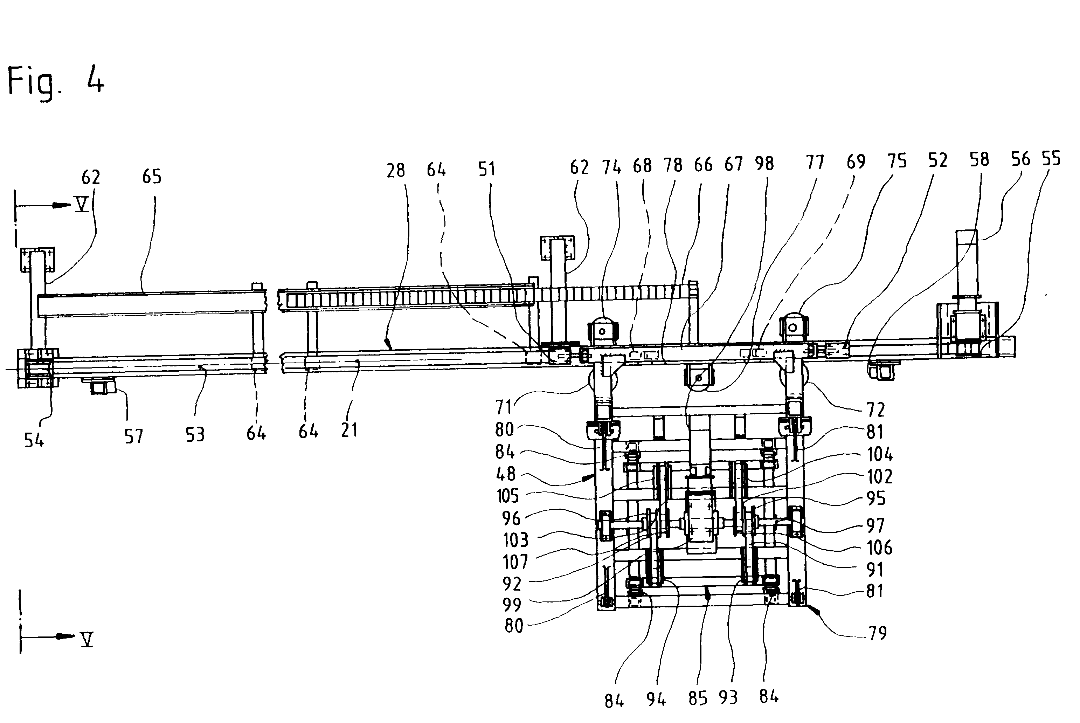

An Anschlußpunkten 51 und 52 des Wagens 48 sind die Enden eines Zahnriemens 53 befestigt. Der Zahnriemen 53 ist über an der Wagenbahn 28 gelagerte Umlenkrollen 54 und 55 geführt. Die Umlenkrolle 55 ist durch einen Elektro-Servomotor 56 (Fig. 4) in beiden Drehrichtungen antreibbar.

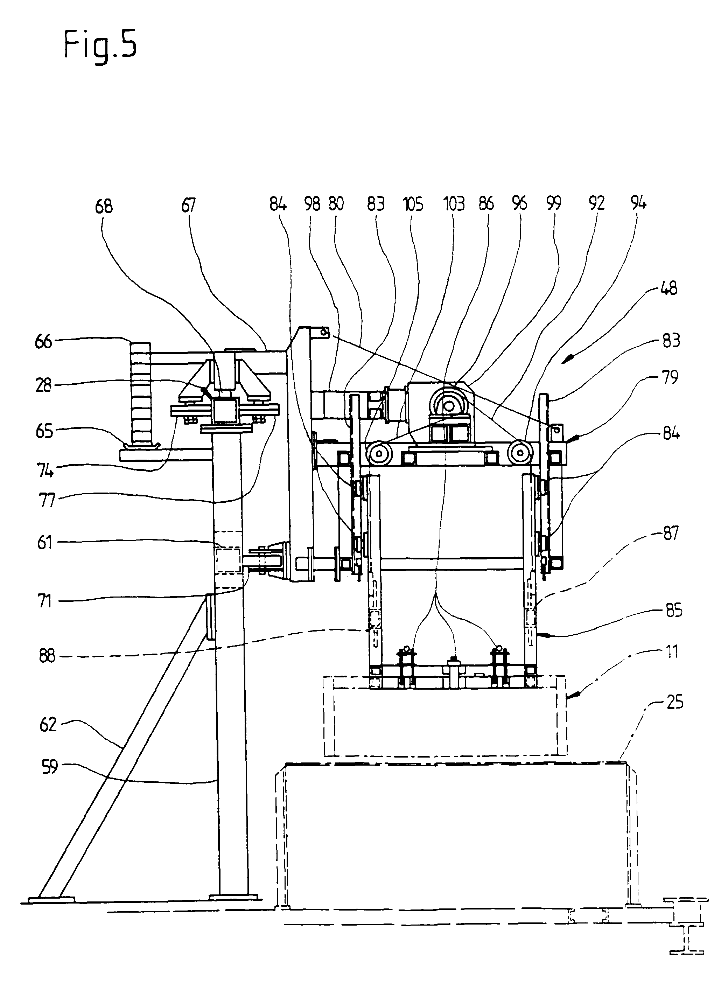

Zur Begrenzung der Fahrbewegung des Wagens 48 sind an der Wagenbahn 28 Stopper 57 und 58 montiert. Die Wagenbahn 28 ruht auf Säulen 59 und 60, die durch eine Traverse 61 miteinander verbunden und durch seitliche Streben 62 (Fig. 5) abgestützt sind.

Die Traverse 61 ist durch eine Zwischensäule 63 und diese wiederum durch eine seitliche Strebe 62 abgestützt. Senkrechte Stützen 64 zwischen der Traverse 61 und der Wagenbahn 28 dienen der Versteifung des Gestells und tragen eine Ablagebahn 65 für einen an dem Wagen 48 angeschlossenen flexiblen Kabelkanal 66.

In Fig. 3 sind mit strichpunktierten Linien das Auflauftransportband 9 und das Lagentransportband 25 angedeutet. Die Wagenbahn 28 erstreckt sich in Fig. 3 nach links über das linke Ende des Auflauftransportbandes 9 hinaus. Dies dient der Erleichterung des Wechsels der Schiebevorrichtung 11, wenn diese aus irgendeinem Grund ausgetauscht werden muß. Der Wagen 48 wird dann so weit in Fig. 3 nach links verfahren, bis das rechte Ende der Schiebevorrichtung 11 sich links von dem Auflauftransportband 9 befindet und dann auf einen in Fig. 3 nicht gezeichneten Transportwagen abgesenkt und von dem Wagen 48 abgekuppelt werden kann. In umgekehrter Reihenfolge wird eine neue Schiebevorrichtung 11 herangefahren und an dem Wagen 48 montiert.

Der Wagen 48 weist einen Rahmen 67 auf, an dem in einem Abstand voneinander Laufrollen 68 und 69 gelagert sind, die auf einer oberen Laufbahn 70 der Wagenbahn 28 abrollen. Der Rahmen 67 trägt weiter unten im Abstand voneinander Stützrollen 71 und 72, die an einer seitlichen Laufbahn 73 der Traverse 61 abrollen. Schließlich sind an dem Rahmen 67 auf der von dem Lagentransportband 25 abgewandten Seite der Wagenbahn 28 im Abstand voneinander Führungsrollen 74 und 75 gelagert. Die Führungsrollen 74, 75 laufen auf einer seitlichen Laufbahn 76 der Wagenbahn 28. Zwischen den Führungsrollen 74, 75 ist an dem Rahmen 67 auf der gegenüberliegenden Seite der Wagenbahn 28 eine Führungsrolle 77 gelagert, die an einer seitlichen Laufbahn 78 der Wagenbahn 28 abrollt (Fig. 4).

An dem Rahmen 67 des Wagens 48 ist in Fig. 4 nach unten hin ein Ausleger 79 montiert, der zusätzlich durch Spannseile 80 und 81 gehalten ist. Der Ausleger 79 weist ein äußeres Gestell 82 von im wesentlichen rechteckiger Querschnittsfläche auf. Innerhalb des Gestells 82 sind in der Nähe der vier Ecken senkrechte Führungsschienen 83 befestigt, in denen jeweils zwei im Abstand voneinander angeordnete Laufrollen 84 eines heb- und senkbaren Käfigs 85 abrollen. An der Unterseite des Käfigs 85 sind Kupplungsorgane 86 angeordnet, durch die sich die Schiebevorrichtung 11 leicht und schnell mit dem Käfig 85 verbinden oder von dem Käfig 85 lösen läßt.

Wie auch Fig. 5 zeigt, weist der Käfig 85 an gegenüberliegenden Seiten je eine waagerechte Traverse 87 und 88 auf. An der Traverse 87 sind Anschlußenden 89 und 90 von Zahnriemen 91 und 92 längeneinstellbar befestigt. Die Zahnriemen 91, 92 laufen über Umlenkrollen 93 und 94 des Auslegers 79 und von dort auf Treibrollen 95 und 96 (Fig. 4), die auf einer Welle 97 befestigt sind. Die Welle 97 ist oben auf dem Ausleger 79 drehbar gelagert und erstreckt sich durch eine Mittenebene des Käfigs 85 und parallel zu der Querebene 21. Die Welle 97 wird durch einen Elektro-Servomotor 98 (Fig. 4) mit nachgeschaltetem Getriebe 99 wahlweise in der einen oder der anderen Drehrichtung angetrieben. Ein oberes Ende der Zahnriemen 91, 92 ist an den Treibrollen 95, 96 befestigt, so daß die Zahnriemen 91, 92 bei Drehung der Welle 97 auf die Treibrollen 95, 96 aufgewickelt oder von dem Treibrollen abgewickelt werden.

An der anderen waagerechten Traverse 88 (Fig. 5) sind Anschlußenden 100 und 101 von Zahnriemen 102 und 103 längeneinstellbar befestigt. Die Zahnriemen 102 und 103 sind über Umlenkrollen 104 und 105 des Auslegers 79 und von dort auf Treibrollen 106 und 107 geführt. Die Treibrollen 106, 107 sind wiederum auf der Welle 97 befestigt. Die Zahnriemen 102, 103 nähern sich den Treibrollen 106, 107 von unten, während sich die Zahnriemen 91, 92 den zugehörigen Treibrollen 95, 96 von oben nähern, wie dies aus Fig. 5 ersichtlich ist. Dies hat zur Folge, daß bei Drehung der Welle 97 entweder alle Zahnriemen 91, 92, 102, 103 aufgewickelt oder alle Zahnriemen gleichzeitig abgewickelt werden. Jede Drehung der Welle 97 hat daher ein Heben oder Senken des Käfigs 85 mit der daran befestigten Schiebevorrichtung 11 zur Folge. Der Elektro-Servomotor 98 wird über den Kabelkanal 66 mit Energie versorgt und gesteuert.

In allen Zeichnungsfiguren sind gleiche Teile mit gleichen Bezugszahlen versehen.

Bei dem Ausführungsbeispiel nach den Fig. 1 bis 5 ist die Schiebevorrichtung 11 auf eine bestimmte Sorte von Glasbehältern 4 eingestellt und wird gegen eine andere ausgetauscht, wenn die Glasbehältersorte gewechselt wird oder wenn Reparaturen durchzuführen sind.

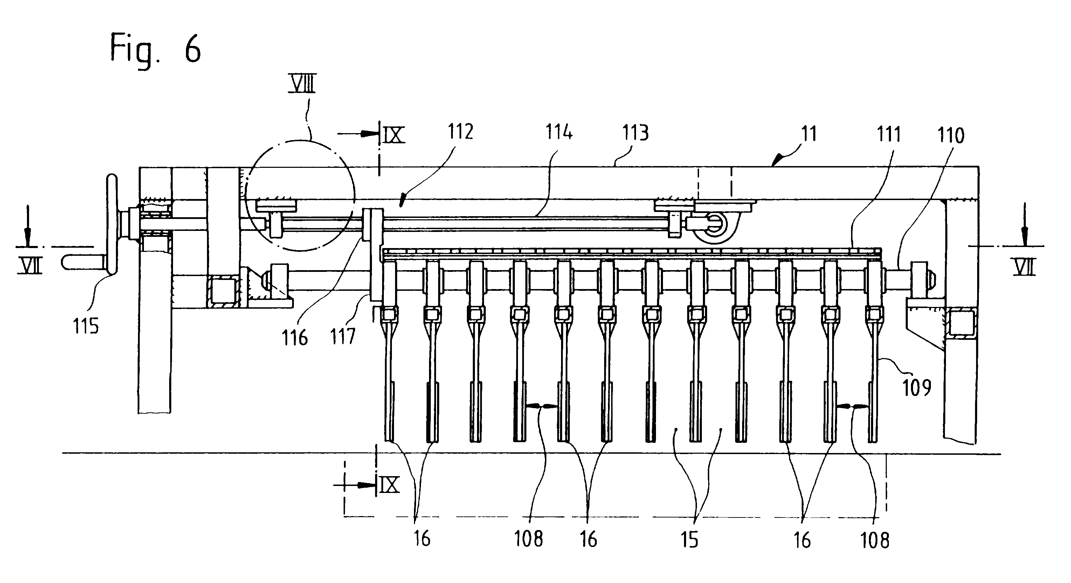

Bei dem anderen Ausführungsbeispiel nach den Fig. 6 bis 10 ist dagegen die Schiebevorrichtung 11 nicht austauschbar, sondern auf die Dimensionen einer geänderten Sorte von Glasbehältern 4 einstellbar. Dies geschieht dadurch, daß der Abstand 108 der seitlichen Begrenzungselemente 16 der Aufnahmeschächte 15 voneinander auf die lichte Weite der Gassen 7 (Fig. 1) eingestellt wird.

Dazu ist ein äußeres seitliches Begrenzungselement 109 an einer Führungsstange 110 befestigt, die sich quer zu der ersten Transportrichtung 10 (Fig. 1) erstreckt. Alle übrigen seitlichen Begrenzungselemente 16 sind auf der Führungsstange 110 verschiebbar, wobei jedes seitliche Begrenzungselement 16, 109 stets einen gleichen Abstand 108 von wenigstens einem benachbarten seitlichen Begrenzungselement 16, 109 aufweist. Alle seitlichen Begrenzungselemente 16, 109 sind durch ein Scherengitter 111 miteinander gekoppelt. An dem das Scherengitter 111 und die verschiebbaren seitlichen Begrenzungselemente 16 aufweisenden System greift ein die Verschiebung der verschiebbaren seitlichen Begrenzungselemente 16 bewirkender Stellantrieb 112 an. Der Stellantrieb 112 weist eine in einem Rahmen 113 der Schiebevorrichtung 11 drehbarer aber axial festgelegte Gewindespindel 114 auf. Die Gewindespindel 114 läßt sich durch ein Handrad drehen und in jeder beliebigen Drehstellung fixieren. Mit der Gewindespindel 114 steht eine Mutter 116 im Eingriff. An der Mutter 116 ist ein Arm 117 befestigt, der an dem äußersten verschiebbaren seitlichen Begrenzungselement 16 angreift. Eine Drehung des Handrades 115 hat daher eine gleichmäBige Vergrößerung oder Verkleinerung der Abstände 108 zur Folge.

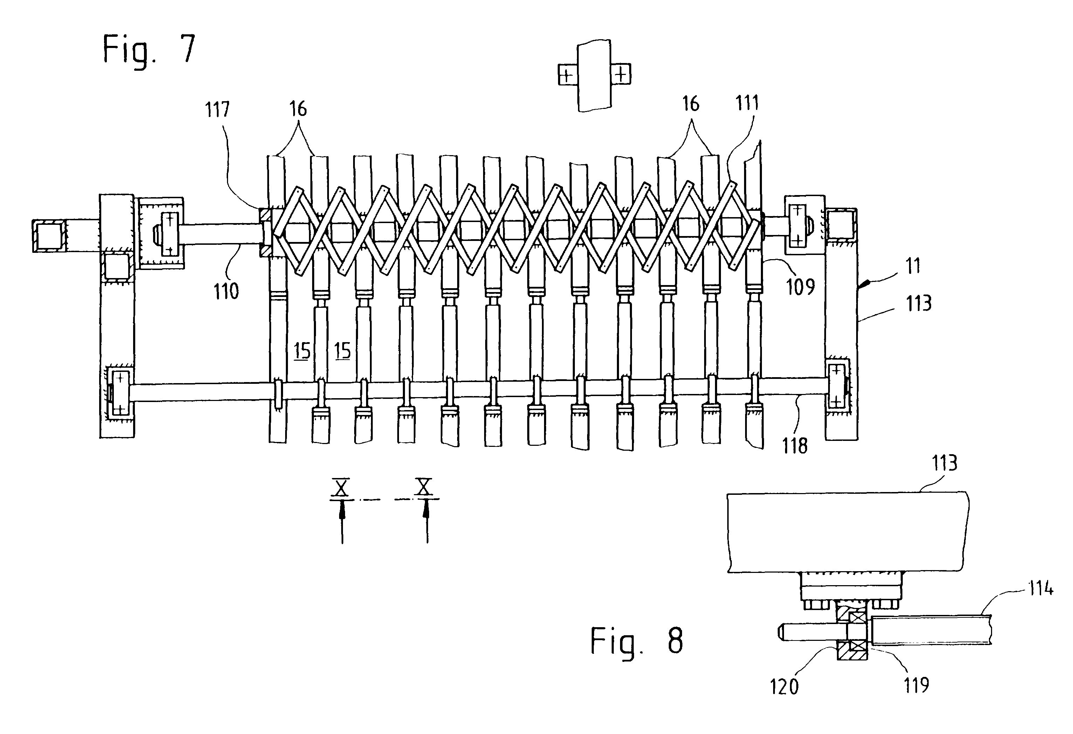

Fig. 7 zeigt, daß parallel zu der Führungsstange 110 noch eine weitere Führungsstange 118 für die seitlichen Begrenzungselemente 16, 109 vorgesehen ist.

Fig. 8 verdeutlicht die axiale Festlegung der Gewindespindel 114 an einem Innenring eines Wälzlagers 119, das in einem Lagerbock 120 des Rahmens 113 gehalten ist.

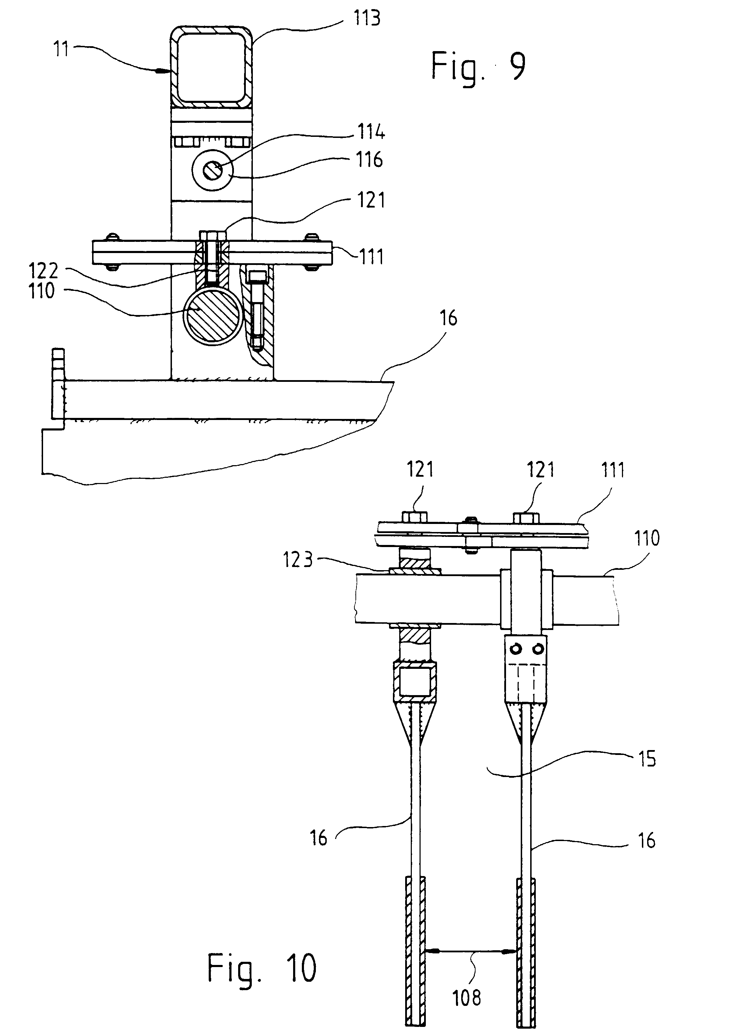

Fig. 9 zeigt Einzelheiten der Verbindung des Scherengitters 111 mit einem der seitlichen Begrenzungselemente 16. Diese Verbindung geschieht durch einen zentralen Gelenkbolzen 121, der in eine obere Ausnehmung 122 des seitlichen Begrenzungselements 16 eingreift.

Fig. 10 zeigt, wie jedes verschiebbare seitliche Begrenzungselement 16 mit einer Gleitbuchse 123 auf der Führungsstange 110 verschiebbar ist.

In Fig. 11 ist die Schiebevorrichtung 11 strichpunktiert dargestellt. Die Einlässe 22 der Aufnahmeschächte 15 (Fig. 12) sind in Fig. 11 durch das gemeinsame, als Schieber ausgebildete Verschlußorgan 23 verschlossen. Der Schieber 23 ist in den Richtungen des Doppelpfeils 124 heb- oder senkbar durch eine Kolben-Zylinder-Einheit 125, deren Zylinder an einer Konsole 126 montiert ist. Die Konsole 126 ist an einer Stütze 127 befestigt, die ihrerseits an der Schiebevorrichtung 11 montiert ist. Eine Kolbenstange 128 der Kolben-Zylinder-Einheit 125 ist durch eine Führung 129 an der Stütze 127 geführt und am oberen Ende des Verschlußorgans 23 angeschlossen.

Fig. 11 zeigt auch, wie die Stoppvorrichtung 14 als Klappe ausgebildet ist, die um eine senkrechte Achse 130 schwenkbar ist.

Fig. 12 zeigt, daß die Kolben-Zylinder-Einheit 125 etwa in der Längsmitte der Schiebevorrichtung 11 angeordnet ist. Im Abstand davon ist auf jeder Seite eine Führung 131 und 132 für das Verschlußorgan 23 an der Schiebevorrichtung 11 vorgesehen. So läßt sich das Verschlußorgan 23 durch die Kolben-Zylinder-Einheit 125 zwängungsfrei relativ zu dem Rest der Schiebevorrichtung 11 heben oder senken.

## Patentansprüche

1. Vorrichtung zum Formatieren von stehend angeordneten Glasbehältern (4) zu einer Lage (31), die auf eine Palette (39) transportierbar ist,
mit einer Auflaufvorrichtung (8), die ein die Glasbehälter (4) tragendes Auflauftransportband (9) und oberhalb des Auflauftransportbands (9) mehrere, sich in einer ersten Transportrichtung (10) des Auflauftransportbands (9) erstreckende Gassen (7) zur Aufnahme der Glasbehälter (4) in einer Reihe (12) aufweist,
mit einer Stoppvorrichtung (14) für die Glasbehälter (4) an einem vorderen Abgabeende jeder Gasse (7),
und mit einer hinter dem Abgabeende jeder Gasse (7) positionierbaren und in einer Querebene (21) quer zu der ersten Transportrichtung (10) bewegbaren Schiebevorrichtung (11),
wobei die Schiebevorrichtung (11) mehrere gegenüber den Abgabeenden der zugehörigen Gassen (7) positionierbare, durch seitliche Begrenzungselemente (16) begrenzte Aufnahmeschächte (15) für ein vorderes Ende (19) jeder Reihe (12) der Glasbehälter (4) aufweist,
wobei die Länge jedes Aufnahmeschachts (15) im wesentlichen der Breite (36) der Lage (20;31) und einer ersten Kantenlänge der Palette (39) entspricht,
wobei jedes vordere Reihenende (19) der Glasbehälter (4) durch die Schiebevorrichtung (11) von dem Auflauftransportband (9) auf ein mit einer zweiten Transportrichtung (26) in der Querebene (21) laufendes Lagentransportband (25) schiebbar ist,
wobei die Schiebevorrichtung (11) am Ende des Schiebevorgangs außer Berührung mit den Glasbehältern (4) hebbar und dann entgegen der zweiten Transportrichtung (26) und durch Senken in ihre Ausgangsposition gegenüber den Abgabeenden der Gassen (7) rückführbar ist,
und wobei die zu einer Lage (20;31) gehörenden vorderen Reihenenden (19) der Glasbehälter (4) auf dem Lagentransportband (25) zu der Lage (31) formatierbar sind,
dadurch gekennzeichnet, daß die Anzahl der Aufnahmeschächte (15) der Schiebevorrichtung (11) wenigstens gleich der Anzahl der zu der Lage (20;31) gehörenden vorderen Reihenenden (19) der Glasbehälter (4) ist,
daß in dem Fall, daß die Anzahl der zu der Lage (20;31) gehörenden vorderen Reihenenden (19) größer als die Anzahl der Gassen (7) ist, die Schiebevorrichtung (11) schrittweise in der Querebene (21) bewegbar ist, bis alle für die Lage (20;31) benötigten Aufnahmeschächte (15) mit Glasbehältern (4) gefüllt sind,
und daß alle zu der Lage (20;31) gehörenden vorderen Reihenenden (19) mit der Schiebevorrichtung (11) gleichzeitig auf das Lagentransportband (25) bis in eine Schiebeendstellung schiebbar sind.

2. Vorrichtung nach Anspruch 1,
dadurch gekennzeichnet, daß sieben Gassen (7) vorgesehen sind.

3. Vorrichtung nach Anspruch 1 oder 2,
dadurch gekennzeichnet, daß Einlässe der Aufnahmeschächte (15) zumindest während des Schiebevorgangs durch ein Verschlußorgan (23) verschließbar sind.

4. Vorrichtung nach einem der Ansprüche 1 bis 3,
dadurch gekennzeichnet, daß der Abstand (108) der seitlichen Begrenzungselemente (16,109) der Aufnahmeschächte (15) voneinander auf die lichte Weite der Gassen (7) einstellbar ist.

5. Vorrichtung nach Anspruch 4,
dadurch gekennzeichnet, daß ein äußeres seitliches Begrenzungselement (109) an einer Führungsstange (110) befestigt ist,
daß alle übrigen seitlichen Begrenzungselemente (16) auf der Führungsstange (110) verschiebbar sind,
daß jedes seitliche Begrenzungselement (16,109) stets einen gleichen Abstand (108) von wenigstens einem benachbarten seitlichen Begrenzungselement (16;109) aufweist,
daß alle seitlichen Begrenzungselemente (16,109) durch ein Scherengitter (111) miteinander gekoppelt sind,
und daß an dem das Scherengitter (111) und die verschiebbaren seitlichen Begrenzungselemente (16) aufweisenden System ein die Verschiebung der verschiebbaren seitlichen Begrenzungselemente (16) bewirkender Stellantrieb (112) angreift.

6. Vorrichtung nach einem der Ansprüche 1 bis 5,
dadurch gekennzeichnet, daß über dem Lagentransportband (25) stromabwärts von der Schiebeendstellung eine sich über die Breite (36) der Lage (20;31) erstreckende erste Anschlagschiene (29) für die Glasbehälter (4) vorgesehen ist,
daß die erste Anschlagschiene (29) nach oben außer Berührung mit den Glasbehältern (4) bewegbar ist,
und daß auf die Breite (36) der Lage (20;31) einstellbare Führungsschienen (32,33) zu beiden Seiten und in Berührung mit der Lage (31) vorgesehen sind.

7. Vorrichtung nach Anspruch 6,
dadurch gekennzeichnet, daß über dem Lagentransportband (25) stromabwärts von der ersten Anschlagschiene (29) eine sich über die Breite (36) der Lage (31) erstreckende zweite Anschlagschiene (34) für die Glasbehälter (4) vorgesehen ist,
daß die zweite Anschlagschiene (34) von der ersten Anschlagschiene (29) einen Abstand aufweist, der größer als die einer zweiten Kantenlänge der Palette (39) entsprechenden Länge (35) der Lage (31) ist,
daß die zweite Anschlagschiene (34) nach oben außer Berührung mit den Glasbehältern (4) bewegbar ist,
und daß die Führungsschienen (32,33) sich in der zweiten Transportrichtung (26) bis hinter die zweite Anschlagschiene (34) erstrecken.

8. Vorrichtung nach einem der Ansprüche 1 bis 7,
dadurch gekennzeichnet, daß in einem Bewegungsbereich der Schiebevorrichtung (11) und parallel zu der Querebene (21) eine geradlinige, stationäre Wagenbahn (28) angeordnet ist.
daß an der Wagenbahn (28) ein Wagen (48) verfahrbar gehalten ist,
und daß an dem Wagen (48) die Schiebevorrichtung (11) heb- und senkbar (98,99) angeordnet ist.

9. Vorrichtung nach Anspruch 8,
dadurch gekennzeichnet, daß an dem Wagen (48) ein flexibles Antriebsorgan (53) befestigt ist,
daß das Antriebsorgan (53) über Umlenkrollen (54,55) an den Enden der Wagenbahn (28) geführt ist,
und daß wenigstens eine (55) der Umlenkrollen (54, 55)drehend antreibbar ist.

10. Verfahren zum Formatieren von stehend angeordneten Glasbehältern (4) zu einer Lage (31), die nachfolgend auf eine Palette (39) transportiert wird,
mit folgenden Schritten:
(a) Die Glasbehälter (4) werden auf einem Auflauftransportband (9) in mehreren Gassen (7) jeweils zu einer Reihe (12) aufgereiht,
(b) die Glasbehälter (4) an einem vorderen Ende (19) jeder Reihe (12) werden durch das Auflauftransportband (9) in einen zugehörigen Aufnahmeschacht (15) einer Schiebevorrichtung (11) gefördert, wobei die Länge der Aufnahmeschächte (15) im wesentlichen der Breite (36) der Lage (20;31) und einer ersten Kantenlänge der Palette (39) entspricht.
(c) die vorderen Reihenenden (19) werden durch die Schiebevorrichtung (11) von dem Auflauftransportband (9) auf ein quer dazu laufendes Lagentransportband (25) geschoben,
(d) die Schiebevorrichtung (11) wird über die Glasbehälter (4) angehoben und in ihre Ausgangsposition gegenüber den Gassen (7) zurückgefahren und abgesenkt,
(e) die zu einer Lage (20;31) gehörenden vorderen Reihenenden (19) werden auf dem Lagentransportband (25) zu der Lage (31) formatiert, und
(f) die formatierte Lage (31) wird über die Palette (39) transportiert,
gekennzeichnet durch folgende Schritte:
(A) Im Schritt (b) werden in die Aufnahmeschächte (15) der Schiebevorrichtung (11) sämtliche zu einer Lage (20;31) gehörenden vorderen Reihenenden (19) gefördert, und
(B) im Schritt (c) werden die sämtlichen zu einer Lage (20;31) gehörenden vorderen Reihenenden (19) gleichzeitig bis in eine Schiebeendstellung auf das Lagentransportband (25) geschoben.

11. Verfahren nach Anspruch 10,
dadurch gekennzeichnet, daß im Schritt (A) in dem Fall, daß die Anzahl der zu der Lage (20;31) gehörenden vorderen Reihenenden (19) größer als die Anzahl der Gassen (7) ist, die Schiebevorrichtung (11) schrittweise parallel zu dem Lagentransportband (25) bewegt wird, bis alle für die Lage (20;31) benötigten Aufnahmeschächte (15) mit Glasbehältern (4) gefüllt sind.

12. Verfahren nach Anspruch 10 oder 11,
dadurch gekennzeichnet, daß im Schritt (a) detektiert wird, wenn in einer Gasse (7) ein umgefallener Glasbehälter (4) liegt,
daß die Abgabe von Glasbehältern (4) aus dieser Gasse (7) bis zur Entfernung des liegenden Glasbehälters (4) unterbunden wird,
daß die Schiebevorrichtung (11) mit dem auf diese Weise zunächst leer gebliebenen Aufnahmeschacht (15) in Fluchtung mit einer Gasse (7) gefahren wird, die wenigstens die von dem Aufnahmeschaft (15) benötigte Anzahl stehender Glasbehälter (4) enthält,
und daß das vordere Reihenende (19) dieser Gasse (7) in den zunächst leer gebliebenen Aufnahmeschacht (15)gefördert wird.

13. Verfahren nach einem der Ansprüche 10 bis 12,
dadurch gekennzeichnet, daß sieben Gassen (7) bereitgestellt werden.

14. Verfahren nach einem der Ansprüche 10 bis 13,
dadurch gekennzeichnet, daß in der Schiebeendstellung die vorderen Reihenenden (19) mit einem Abstand voneinander an das Lagentransportband (25) übergeben werden,
und daß diese vorderen Reihenenden (19) dadurch zu der Lage (31) formatiert werden, daß das Lagentransportband (25) das vorderste vordere Reihenende (19) gegen eine sich quer zu dem Lagentransportband (25) erstreckende erste Anschlagschiene (29) und die nachfolgenden vorderen Reihenenden (19) jeweils gegen das vorangehende vordere Reihenende (19) fördert, während sich parallel zu dem Lagentransportband (25) auf beiden Seiten der Lage (31) erstreckende Führungsschienen (32,33) der Lage (31) seitlichen Halt geben.

15. Verfahren nach Anspruch 14,
dadurch gekennzeichnet, daß die formatierte Lage (31) - nach Entfernung der ersten Anschlagschiene (29)- durch das Lagentransportband (25) gegen eine stromabwärts von der ersten Anschlagschiene (29) angeordnete zweite Anschlagschiene (34) gefördert wird,
und daß nach Entfernung der zweiten Anschlagschiene (34) die formatierte Lage (31) auf die Palette (39) weitertransportiert wird.

16. Verfahren nach einem der Ansprüche 10 bis 15,
dadurch gekennzeichnet, daß der Abstand (108) seitlicher Begrenzungselemente (16,109) der Aufnahmeschächte (15) voneinander zur Anpassung an die lichte Weite der Gassen (7) eingestellt wird.

## Claims

1. Device for arranging vertically standing glass containers (4) in a layer (31) which can be transported on to a pallet (39),
having a run-up device (8) which comprises a run-up transportation belt (9) which carries the glass containers (4) and above the run-up transportation belt (9) a plurality of passages (7) which extend in a first transportation device (10) of the run-up transportation belt (9) for the purpose of receiving the glass containers (4) in a row (12),
having a stop device (14) for the glass containers (4) at a front discharging end of each passage (7),
and having a displacing device (11) which can be positioned behind the discharge end of each passage (7) and can be moved in a transverse plane (21) in a transverse manner with respect to the first transportation device (10),
wherein the displacing device (11) comprises a plurality of receiving shafts (15) for a front end (19) of each row (12) of the glass containers (4), which receiving shafts can be positioned opposite the discharge ends of the associated passages (7) and are defined by the lateral defining elements (16),
wherein the length of each receiving shaft (15) con-esponds substantially to the width (36) of the layer (20;31) and a first edge length of the pallet (39),
wherein each front row end (19) of the glass containers (4) can be displaced by means of the displacing device (11) from the run-up transportation belt (9) on to a layer transportation belt (25) which runs in a second transportation direction (26) in the transverse plane (21),
wherein the displacing device (11) can be raised at the end of the displacing procedure out of contact with the glass containers (4) and then opposite to the second transportation direction (26) and by being lowered can be returned into its original position opposite the discharge ends of the passages (7),
and wherein the front row ends (19) of the glass containers (4) forming part of a layer (20;31) can be arranged on the layer transportation belt (25) to form the layer (31),
characterized in that the number of the receiving shafts (15) of the displacing device (11) is at least equal to the number of the front row ends (19) of the glass containers (4) forming part of the layer (20;31),
that in the event that the number of the front row ends (19) forming part of the layer (20;31) is greater than the number of passages (7), the displacing device (11) can be moved in steps in the transverse plane, until all the receiving shafts (15) required for the layer (20;31) are filled with glass containers (4),
and that all the front row ends (19) forming part of the layer (20;31) can be displaced with the displacing device (11) simultaneously onto the layer transportation belt (25) until they arrive at a displacement end position.

2. Device according to claim 1,
characterized in that seven passages (7) are provided.

3. Device according to claim 1 or 2
characterized in that the inlets of the receiving shafts (15) can be closed at least during the displacement procedure by a closure member (23).

4. Device according to any one of claims 1 to 3,
characterized in that the distance (108) between the lateral defining elements (16, 109) and the receiving shafts (15) can be adjusted to the inner diameter of the passages (7).

5. Device according to claim 4,
characterized in that an outer lateral defining element (109) is attached to a guide rod (110),
that all other lateral defining elements (16) can be displaced on the guide rod (110),
that each lateral defining element (16, 109) always maintains an equal distance (108) from at least one adjacent lateral defining element (16; 109),
that all lateral defining elements (16, 109) are coupled to each other by means of a slidable lattice grate (111),
and that the system which comprises the slidable lattice grate (111) and the displaceable lateral defining elements (16) is engaged by an actuator drive (112) which effects the displacement of the displaceable lateral defining elements (16).

6. Device according to any one of claims 1 to 5,
characterized in that over the layer transportation belt (25) a first stop rail (29) for the glass containers (4) is provided extending over the width (36) of the layer (20;31) and downstream of the displacement end position,
that the first stop rail (29) can be moved upwards out of contact with the glass containers (4),
and that guide rails (32, 33) which can be adjusted to the width (36) of the layer (20;31) are provided on both sides and in contact with the layer (31).

7. Device according to claim 6,
characterized in that over the layer transportation belt (25) a second stop rail (34) for the glass containers (4) is provided downstream of the first stop rail and extending over the width (36) of the layer (31),
that the distance between the second stop rail (34) and the first stop rail (29) is greater than the length (35) of the layer (31), which length corresponds to a second edge length of the pallet (39),
that the second stop rail (34) can be moved upwards out of contact with the glass containers (4),
and that the guide rails (32,33) extend in the second transportation direction (26) to behind the second stop rail (34).

8. Device according to any one of claims 1 to 7,
characterized in that a linear, stationary carriage rail (28) is disposed in a movement range of the displacing device (11) and parallel to the transverse plane (21),
that a carriage (48) can be held in such a manner as to be able to drive on the carriage rail (28),
and that the displacing device (11) is disposed in such a manner as to be able to be raised and lowered (98,99) on the carriage (48).

9. Device according to claim 8,
characterized in that a flexible drive member (53) is attached to the carriage (48),
that the drive member (53) is guided by way of deflecting rollers (54,55) on the ends of the carriage rail (28),
and that at least one (55) of the deflecting rollers (54,55) can be driven in a rotatable manner.

10. Method of arranging vertically standing glass containers (4) to form a layer (31) which is subsequently transported on to a pallet (39),
comprising the following steps:
(a) the glass containers (4) are positioned in rows on a run-up transportation belt (9) in a plurality of passages (7) in each case to form a row (12),
(b) the glass containers (4) at a front end (19) of each row (12) are conveyed by the run-up transportation belt (9) into an associated receiving shaft (15) of a displacing device (11), wherein the length of the receiving shafts (15) corresponds substantially to the width (36) of the layer (20;31) and a first edge length of the pallet (39),
(c) the front row ends (19) are displaced by means of the displacing device (11) from the run-up transportation belt (9) to a layer transportation belt (25) running transverse thereto,
(d) the displacing device (11) is raised over the glass containers (4) and returned and lowered to its original position opposite the passages (7).
(e) the front row ends (19) forming part of a layer (20;31) are arranged to form a layer (31) on the layer transportation belt (25), and
(f) the arranged layer (31) is transported over the pallet (39),
characterized by the following steps:
(A) in step (b) all front row ends (19) forming part of a layer (20;31) are conveyed into the receiving shafts (15) of the displacing device (11), and
(B) in step (c) the front row ends (19) all forming part of a layer (20;31) are displaced simultaneously as far as a displacement end position on to the layer transportation belt (25).

11. Method according to claim 10,
characterized in that in step (A) in the event that the number of the front row ends (19) forming part of the layer (20;31) is greater than the number of the passages (7), the displacement device (11) is moved in steps in parallel with the layer transportation belt (25) until all the receiving shafts (15) required for the layer (20;31) are filled with glass containers (4).

12. Method according to claim 10 or 11,
characterized in that it is detected in step (a) if there is an upset glass container (4) in a passage (7),
that the discharge of glass containers (4) from this passage (7) is prohibited until the upset glass container (4) is removed,
that the displacing device (11) with the receiving shaft (15) which initially remains empty in this manner is moved into alignment with a passage (7) which contains at least the number of vertical glass containers required by the receiving shaft (15),
and that the front row end (19) of this passage (7) is conveyed into the receiving shaft (15) which has initially remained empty.

13. Method according to any one of claims 10 to 12,
characterized in that seven passages (7) are provided.

14. Method according to any one of claims 10 to 13,
characterized in that in the displacement end position the front row ends (19) are conveyed at a distance from each other onto the layer transportation belt (25),
and that these front row ends (19) are arranged in this manner to form the layer (31), that the layer transportation belt (25) conveys the foremost front row end (19) against a first stop rail (29) which extends transverse to the layer transportation belt (25) and the front row ends (19) following on are conveyed in each case towards the front row end (19) moving head, whilst the guide rails (32, 33) of the layer (31) which extend in parallel with the layer transportation belt (25) on both sides of the layer (31) provide lateral support.

15. Method according to claim 14,
characterized in that the arranged layer (31) - after removing the first stop rail (29) - is conveyed by the layer transportation belt (25) against a second stop rail (34) which is disposed downstream of the first stop rail (29),
and that after removing the second stop rail (34) the arranged layer (31) is further conveyed to the pallet (39).

16. Method according to any one of claims 10 to 15,
characterized in that the distance (108) between the lateral defining elements (16, 109) and the receiving shafts (15) is adjusted to suit the inner diameter of the passages (7).

## Revendications

1. Dispositif destiné à la disposition de récipients en verre (4), placés debout, en un groupe ordonné (31), qui peut être transporté jusque sur une palette (39),
comportant un dispositif de chargement (8), qui présente une bande transporteuse de chargement (9) portant les récipients en verre (4) et, au-dessus de la bande transporteuse de chargement (9), plusieurs voies (7), qui s'étendent dans un premier sens d'acheminement (10) de la bande transporteuse de chargement (9) et qui servent à recevoir les récipients en verre (4) en une rangée (12),
un dispositif d'arrêt (14) pour les récipients en verre (4), au niveau d'une extrémité avant de sortie de chaque voie (7),
et un dispositif de poussée (11), qui peut être positionné derrière l'extrémité de sortie de chaque voie (7) et qui est mobile dans un plan transversal (21), transversalement au premier sens d'acheminement (10),
dans lequel le dispositif de poussée (11) présente plusieurs cages réceptrices (15) pour une extrémité avant (19) de chaque rangée (12) des récipients en verre (4), ces cages étant délimitées par des éléments latéraux de délimitation (16) et pouvant être positionnées par rapport aux extrémités de sortie des voies (7) correspondantes,
dans lequel la longueur de chaque cage réceptrice (15) correspond sensiblement à la largeur (36) du groupe ordonné (20 ; 31) et à une première longueur de bord de la palette (39),
dans lequel chaque extrémité de rangée avant (19) des récipients en verre (4) peut être déplacée, par le dispositif de poussée (11), depuis la bande transporteuse de chargement (9) jusque sur une bande transporteuse de groupes (25) qui s'étend dans le plan transversal (21) avec un deuxième sens d'acheminement (26),
dans lequel le dispositif de poussée (11) peut être relevé à la fin de l'opération de poussée pour être hors de contact avec les récipients en verre (4) et être ensuite ramené, en sens inverse du deuxième sens d'acheminement (26), vers sa position de départ pour y être de nouveau abaissé en face des extrémités de sortie des voies (7),
et dans lequel les extrémités de rangée avant (19) des récipients en verre (4), appartenant à un groupe ordonné (20 ; 31), sont disposées sur la bande transporteuse de groupes (25) suivant le groupe ordonné (31),
caractérisé en ce que le nombre des cages réceptrices (15) du dispositif de poussée (11) est au moins égal au nombre des extrémités de rangée avant (19) des récipients en verre (4) appartenant au groupe ordonné (20 ; 31),
en ce que, dans le cas où le nombre des extrémités de rangée avant (19) appartenant au groupe ordonné (20 ; 31) est supérieur au nombre des voies (7), le dispositif de poussée (11) peut être déplacé pas à pas dans le plan transversal (21) jusqu'à ce que toutes les cages réceptrices (15), nécessaires au groupe (20 ; 31), soient remplies de récipients en verre (4),
et en ce que toutes les extrémités de rangée avant (19) appartenant au groupe ordonné (20 ; 31) peuvent être déplacées simultanément par le dispositif de poussée (11) pour arriver sur la bande transporteuse de groupes (25) et pour atteindre une position finale de poussée.

2. Dispositif selon la revendication 1,
caractérisé en ce qu'il est prévu sept voies (7).

3. Dispositif selon la revendication 1 ou 2,
caractérisé en ce que des entrées des cages réceptrices (15) peuvent être fermées par un organe d'obturation (23), au moins pendant l'opération de poussée.

4. Dispositif selon l'une des revendications 1 à 3,
caractérisé en ce que la distance (108) entre eux des éléments latéraux de délimitation (16, 109) des cages réceptrices (15) peut être réglée sur la cote de passage des voies (7).

5. Dispositif selon la revendication 4,
caractérisé en ce qu'un élément latéral de délimitation (109) extérieur est fixé sur une tige de guidage (110),
en ce que tous les autres éléments latéraux de délimitation (16) sont mobiles sur la tige de guidage (110),
en ce que chaque élément latéral de délimitation (16, 109) présente, en permanence, une distance (108) égale par rapport à au moins un élément latéral de délimitation (16 ; 109) voisin,
en ce que tous les éléments latéraux de délimitation (16, 109) sont reliés les uns aux autres par un ensemble de leviers croisés (111),
et en ce qu'un mécanisme de réglage (112), qui effectue le déplacement des éléments latéraux de délimitation (16) mobiles, agit sur le système présentant l'ensemble de leviers croisés (111) et les éléments latéraux de délimitation (16) mobiles.

6. Dispositif selon l'une des revendications 1 à 5,
caractérisé en ce qu'il est prévu, pour les récipients en verre (4), un premier rail de butée (29), qui s'étend sur la bande transporteuse de groupes (25) en aval par rapport à la position de fin de poussée, sur la largeur (36) du groupe ordonné (20 ; 31),
en ce que le premier rail de butée (29) peut être déplacé vers le haut, hors de contact avec les récipients en verre (4),
et en ce que des rails de guidage (32, 33), réglables sur la largeur (36) du groupe ordonné (20 ; 31), sont prévus des deux côtés du groupe ordonné (31) et en contact avec celui-ci.

7. Dispositif selon la revendication 6,
caractérisé en ce qu'il est prévu, pour les récipients en verre (4), un deuxième rail de butée (34), qui s'étend sur la bande transporteuse de groupes (25) en aval par rapport au premier rail de butée (29), sur la largeur (36) du groupe ordonné (31),
en ce que le deuxième rail de butée (34) est situé, par rapport au premier rail de butée (29), à une distance qui est plus grande que la longueur (35) du groupe ordonné (31) correspondant à une deuxième longueur de bord de la palette (39),
en ce que le deuxième rail de butée (34) peut être déplacé vers le haut, hors de contact avec les récipients en verre (4),
et en ce que les rails de guidage (32, 33) s'étendent, dans le deuxième sens d'acheminement (26) jusque derrière le deuxième rail de butée (34).

8. Dispositif selon l'une des revendications 1 à 7,
caractérisé en ce qu'un chemin de roulement de chariot (28), fixe et rectiligne, est disposé dans une plage de mouvement du dispositif de poussée (11) et parallèlement au plan transversal (21),
en ce qu'un chariot (48) est monté, de manière déplaçable, sur le chemin de roulement de chariot (28),
et en ce que le dispositif de poussée (11) est disposé, de manière ascendante et descendante (98, 99), contre le chariot (48).

9. Dispositif selon la revendication 8,
caractérisé en ce qu'un organe d'entraînement (53) souple est fixé au niveau du chariot (48),
en ce que l'organe d'entraînement (53) est guidé par l'intermédiaire de poulies de renvoi (54, 55) au niveau des extrémités du chemin de roulement de chariot (28),
et en ce qu'au moins l'une (55) des poulies de renvoi (54, 55) peut être commandée en rotation.

10. Procédé de disposition de récipients en verre (4), placés debout, en un groupe ordonné (31), qui est ensuite transporté jusque sur une palette (39),
comprenant les étapes suivantes :
(a) les récipients en verre (4) sont alignés, chaque fois en une rangée (12) dans plusieurs voies (7) sur une bande transporteuse de chargement (9),
(b) les récipients en verre (4) au niveau d'une extrémité avant (19) de chaque rangée (12) sont acheminés par la bande transporteuse de chargement (9) vers une cage réceptrice (15) coordonnée d'un dispositif de poussée (11), la longueur des cages réceptrices (15) correspondant sensiblement à la largeur (36) du groupe ordonné (20 ; 31) et à une première longueur de bord de la palette (39),
(c) les extrémités de rangée avant (19) sont déplacées, par le dispositif de poussée (11), depuis la bande transporteuse de chargement (9) jusque sur une bande transporteuse de groupes (25) qui s'étend transversalement par rapport à celle-ci,
(d) le dispositif de poussée (11) est relevé au-dessus des récipients en verre (4) et il est ramené dans sa position de départ pour y être de nouveau abaissé en face des voies (7),
(e) les extrémités de rangée avant (19) appartenant à un groupe ordonné (20 ; 31) sont disposées en groupe ordonné (31) sur la bande transporteuse de groupes (25), et
(f) le groupe ordonné (31) est transporté par l'intermédiaire de la palette (39),
caractérisé par les étapes suivantes :
(A) dans l'étape (b), la totalité des extrémités de rangée avant (19) appartenant à un groupe ordonné (20 ; 31) sont amenées dans les cages réceptrices (15) du dispositif de poussée (11), et
(B) dans l'étape (c), la totalité des extrémités de rangée avant (19) appartenant à un groupe ordonné (20 ; 31) sont déplacées simultanément jusque dans une position finale de poussée sur la bande transporteuse de groupes (25).

11. Procédé selon la revendication 10,
caractérisé en ce que, dans l'étape (A), si le nombre des extrémités de rangée avant (19) appartenant au groupe ordonné (20 ; 31) est supérieur au nombre des voies (7), le dispositif de poussée (11) est alors déplacé pas à pas parallèlement à la bande transporteuse de groupes (25), jusqu'à ce que toutes les cages réceptrices (15), nécessaires au groupe ordonné (20 ; 31), soient remplies de récipients en verre (4).

12. Procédé selon la revendication 10 ou 11,
caractérisé en ce qu'il est détecté, dans l'étape (a) si un récipient en verre (4) s'est renversé dans une voie (7),
en ce que le transfert de récipients en verre (4), à partir de cette voie (7), est interrompu jusqu'à ce que soit enlevé le récipient en verre (4) couché,
en ce que le dispositif de poussée (11) est amené en alignement, par la cage réceptrice (15) restée d'abord vide de ce fait, avec une voie (7) qui contient au moins le nombre de récipients en verre (4) debout, nécessités par la cage réceptrice (15), et
en ce que l'extrémité de rangée avant (19) de cette voie (7) est acheminée jusque dans la cage réceptrice (15) restée d'abord vide.

13. Procédé selon l'une des revendications 10 à 12,
caractérisé en ce que sept voies (7) sont disponibles.

14. Procédé selon l'une des revendications 10 à 13,
caractérisé en ce que, dans la position finale de poussée, les extrémités de rangée avant (19) sont transférées, avec une certaine distance entre elles, sur la bande transporteuse de groupes (25),
et en ce que ces extrémités de rangée avant (19) sont disposées en un groupe ordonné (31) par un processus selon lequel la bande transporteuse de groupes (25) achemine l'extrémité de rangée avant (19) située le plus à l'avant contre un premier rail de butée (29), qui s'étend transversalement à la bande transporteuse de groupes (25), et les extrémités de rangée avant (19) suivantes, chaque fois contre l'extrémité de rangée avant (19) précédente, tandis que des rails de guidage (32, 33), qui s'étendent parallèlement à la bande transporteuse de groupes (25) des deux côtés du groupe ordonné (31) assurent une retenue latérale de ce groupe (31).

15. Procédé selon la revendication 14,
caractérisé en ce que le groupe ordonné (31) est acheminé, après le retrait du premier rail de butée (29), par la bande transporteuse de groupes (25) vers un deuxième rail de butée (34), situé en aval par rapport au premier rail de butée (29),
et en ce que, après le retrait du deuxième rail de butée (34), le groupe ordonné (31) est transporté jusque sur la palette (39).

16. Procédé selon l'une des revendications 10 à 15,
caractérisé en ce que la distance (108) entre eux d'éléments latéraux de délimitation (16, 109) des cages réceptrices (15) est réglée pour s'adapter à la cote de passage des voies (7).
